Europäisches Patentamt

European Patent Office

Office européen des brevets

(11) Publication number: **0 186 985**
**B1**

(12) **EUROPEAN PATENT SPECIFICATION**

(45) Date of publication of patent specification: **08.03.89**

(51) Int. Cl.⁴: **B 60 C 1/00, C 08 L 9/00**

(21) Application number: **85308904.3**

(22) Date of filing: **06.12.85**

⑩ A request for correction of claim 1 has been filed on 140185 pursuant to Rule 88 EPC. A decision on the request will be taken during the proceedings before the Examining Division.

(54) Diene elastomer compositions.

(30) Priority: **07.12.84 JP 259662/84**

(43) Date of publication of application:
**09.07.86 Bulletin 86/28**

(45) Publication of the grant of the patent:
**08.03.89 Bulletin 89/10**

(84) Designated Contracting States:
**DE FR GB**

(56) References cited:
**EP-A-0 064 400**
**EP-A-0 090 365**
**EP-A-0 102 045**
**DE-A-1 906 037**
**DE-A-1 957 366**
**US-A-4 387 756**

The file contains technical information submitted after the application was filed and not included in this specification

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Takao, Hiroyoshi**
**3-7-16, Kurosunadai**
**Chiba-shi Chiba 281 (JP)**
Inventor: **Yoshida, Nobuyuki**
**4-19-4, Aobadai**
**Ichihara-shi Chiba 299-01 (JP)**
Inventor: **Imai, Akio**
**3-17-10, Aobadai**
**Ichihara-shi Chiba 299-01 (JP)**

(74) Representative: **Myerscough, Philip Boyd et al**
**J.A.Kemp & Co. 14, South Square Gray's Inn**
**London, WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a diene elastomer-containing composition especially suitable for use as tread rubber for automobile tires.

Automobile fuel economy has been strongly demanded for saving of energy. The rolling resistance of tires has an important effect on fuel costs and reductions in rolling resistance have been sought.

When the rolling resistance of a tire is considered from the view point of the structural elements of tire, it is recognized that the tread rubber greatly participates therein, namely about 40% of the rolling resistance of the whole tire. Rolling resistance is caused by energy loss due to repeated deformations of a tire during running of automobiles. Thus, a reduction in rolling resistance means a reduction in energy loss.

On the other hand, wet grip is an important safety characteristic required for tires and relates to the driving safety and braking efficiency on a wet road surface, for example wet by rain. It is a frictional resistance which occurs due to contact between the tread surface and the road surface.

Natural rubber, polyisoprene rubber, high cis-1,4-polybutadiene rubber and styrene-butadiene rubber produced by emulsion polymerization method, have been mainly used as rubber components for tread rubber compositions. The first three of these have excellent rolling resistance, but a low wet grip. Styrene-butadiene rubber has excellent wet grip, but poor rolling resistance. Thus, the properties of rolling resistance and wet grip have not been compatible with each other and either one has been sacrificed or the two have been balanced by using mixtures of rubbers. However, these are still unsatisfactory from the standpoint of compatibility of high wet grip and low rolling resistance.

Various rubbery compositions have been proposed to improve the balance of the two properties. For example EP—A—64400 describes a diene rubber composition, for use in tire treads, comprising 25 to 90 parts by weight of at least one high molecular diene rubber (A) having an intrinsic viscosity [η] of at least 2.0 and a glass transition point of not lower than −50°C and 75 to 10 parts by weight of at least one low molecular weight diene rubber (B) having an intrinsic viscosity [η] of 0.01 to 2.0, the composition having an average intrinsic viscosity of at least 1.8.

EP—A—90365 describes a rubber composition, for use in tire treads, comprising a polymer as a rubber component and rubber additives, said polymer being a butadiene homopolymer or a styrene-butadiene copolymer prepared by a solution polymerization method and having a glass transition temperature of not less than −50°C, and at least 70% by weight of the polymer chains of said polymer having a branched structure in which high molecules are coupled by a trifunctional or tetrafunctional coupling agent.

EP—A—102045 describes a diene rubber composition, for use in tire treads, comprising an elastomeric polymer as a main rubber component and rubber additives, said elastomeric polymer being an elastomeric homopolymer of butadiene or copolymer of butadiene and an aromatic vinyl compound prepared by a solution polymerization method and having a glass transition temperature of not less than −50°C, and not less than 40% by weight to less than 65% by weight of the polymer chains of said elastomeric polymer being those modified with a trifunctional or tetrafunctional coupling agent.

In an attempt to provide rubbery compositions which combine low rolling resistance and high wet grip suitable especially for tread rubbers of automobile tires we have carried out research on the relation between the molecular shape of raw material elastomers and the loss of dynamic energy of vulcanized elastomer composition at a frequency of 10—100 Hz and a temperature of 50°C—80°C, at which frequency and temperature ranges an increased loss of dynamic energy due to repeated movement of a tire increases rolling resistance. As a result, we have found that compositions comprising elastomers having a specific molecular structure can afford very low rolling resistance and excellent wet grip.

The invention accordingly provides a diene elastomer composition which contains a rubber material comprising a rubbery component and, as main ingredient, an elastomeric polymer component which is a butadiene homopolymer and/or styrene-butadiene copolymer which has been produced using an organolithium compound as a copolymerization initiator, the elastomeric component having a long chain and concentration (LCEC) of 0.58 or less as defined by the following formula:

$$LCEC = \sum_i \beta_i \times (\alpha \times 10^5) / (\overline{MW})_i$$

wherein

$\alpha$: total number of terminal groups in long chain molecules per polymer;

$\overline{MW}$: a value obtained from intrinsic viscosity of the polymer when measured in toluene at 30°C by the following formulas:

$\overline{MW} = 70,660 \times _{[\eta]}^{1.282}$ for styrene-butadiene copolymer,

$\overline{MW} = 79,167 \times _{[\eta]}^{1.443}$ for butadiene homopolymer,

$\beta_i$: weight fraction of component i when $\overline{MW} = (\overline{MW})_i$.

In the above formula $\alpha$ is a constant defined as a total number of terminal groups in long chain molecules per polymer and is 2 for unbranched linear polymers and n for star polymers obtained by coupling propagating ends of the linear living polymers with an n-functional coupling reagent (referred to as "n-functional star polymers" hereinafter). $\overline{MW}$ is, for a linear polymer, a value obtained on the basis of intrinsic viscosity ([η]) and, for n-functional star polymer, is the value $\overline{MW}$ obtained from the intrinsic viscosity of linear polymer before coupling multiplied by n.

Thus, LCEC as used in this specification is the number of terminal groups in long chain molecules in an elastomeric component which is allocated to each $10^5$ of molecular weight. According to this invention, it has been found that the mechanical loss factor (tan δ) at 50°C—80°C of a vulcanized composition comprising the elastomeric component and to which compounding ingredients are added is determined unconditionally by the LCEC of raw material elastomers.

Regarding the LCEC, an additive property exists among a plurality of elastomers. Mixtures of two unbranched linear polymers different in mean molecular weight, mixtures of a star polymer and a linear polymer or mixtures of a styrene-butadiene copolymer and a butadiene polymer can be used in accordance with the invention as long as the mean weight value of weight fraction of LCEC in original polymers is specified herein.

Preferred elastomeric polymers for use in the composition of this invention, are linear polymers obtained by polymerization of butadiene or copolymerization of butadiene with styrene in a hydrocarbon solvent in the presence of a polar compound, such as ether or a tertiary amine, using an organolithium compound as a polymerization initiator. In addition, star polymers may be used which are obtained by coupling propagating ends of linear living polymers with a polyfunctional binder. These polymers may be used alone or as mixtures.

These elastomeric polymers preferably have a long chain end concentration (LCEC) of 0.2—0.58 and a glass transition temperature within the range of −55°C to −25°C as measured by differential thermal analyzer (DSC) for obtaining high wet grip.

The composition of this invention contains said elastomeric polymer component as main rubber ingredient, preferably in an amount of 60 to 100% by weight of the rubber material. The other component of the rubber material is a rubbery component, such as natural rubber, synthetic isoprene rubber, styrene-butadiene rubber produced by emulsion polymerization or high cis content polybutadiene rubber, preferably in an amount of 0—40% by weight of the rubber material of the composition.

In addition to these rubbery components, the diene elastomer composition of this invention may contain various compounding ingredients normally used for rubbery compositions such as carbon black, oils, stearic acid, zinc oxide, antioxidant, vulcanization accelerator and sulfur, depending on the intended use of the composition. Carbon black is preferably used in an amount of 30—80 parts by weight per 100 parts by weight of the rubber material from the point of rolling resistance and strength. When oil is added, the amount is preferably 30 parts by weight or less per 100 parts by weight of the rubber material from the point of rolling resistance.

That is, the diene elastomer composition of this invention possesses both low rolling resistance and high wet grip, which properties have hitherto been considered incompatible with each other. Hence, the composition may be used preferably as rubbers for tread of automobile tires.

This invention will be further illustrated by the following examples.

Examples 1—3 and Comparative Examples 1—17

Various butadiene polymers and styrene-butadiene polymers A—H as shown in Table 1 were prepared by polymerization method which employs organolithium as a polymerization initiator. LCEC of these polymers were calculated from their intrinsic viscosity [η] in accordance with the calculation formulas given hereinbefore.

The following ingredients were added to each polymer or mixture thereof and were mixed. Each mixture was press vulcanized at 150°C for 30 minutes to obtain specimens for measurement of properties.

| Polymer (or polymer mixture) | | 100 parts by weight |
|---|---|---|
| Ingre-dients | Carbon black | 60 |
| | Aromatic oil | 20 |
| | Zinc oxide | 5 |
| | Stearic acid | 2 |
| | Vulcanization accelerator | 2 |
| | Sulfur | 1.5 |

Each of the thus obtained specimens was subjected to measurement of properties. The results are given in Table 2.

LCEC of polymer mixture was calculated by the following formula and properties of the polymers and the specimens were measured by the following methods.

**EP 0 186 985 B1**

$$\text{LCEC of mixture} = \text{LCEC}_I \times W_I + \text{LCEC}_{II} \times W_{II}$$

(wherein suffixes I and II indicate polymers I and II, respectively and $W_I$ and $W_{II}$ indicate weight fraction of polymers I and II in the mixture, respectively).

Content of styrene and content of 1,2-vinyl bond
These were determined by analysis according to Morero method using an infrared absorption spectrometer. For determination of the styrene content, JIS method using a refractometer was also used in combination with the Morero method.

Intrinsic viscosity [η]
This was measured in toluene solvent at 30°C using an Ostwald type solution viscometer.

Glass transition temperature
Measurement was made by a differential scanning calorimeter (DCS) (Du Pont) at a heating rate of 20°C/min and the transition temperature was determined from position of transition endothermic peak.

Wet grip index
Measurement was made on a vulcanized rubber sheet of in 6.5 mm thick a portable skid resistance tester of Stanley Co. As the contacting road surface was employed an asphalt surface sprayed with water of 20°C.

Loss factor
Value of tan δ at 60°C of vulcanized sheet was measured under the conditions of initial extension of 0.6%, both amplitudes of 0.1% and frequency of 11 Hz by a dynamic solid viscoelastometer of Toyo Bowldwin Co. The smaller tan δ indicates the lower rolling resistance.

4

Table 1

| Polymers | Kinds of Polymers | Styrene content (wt%) | Vinyl content(%) (Bound butadiene was assumed to be 100) | Glass transi-sition temperature(°C) | [η] | LCEC |
|---|---|---|---|---|---|---|
| A | Linear polybutadiene | – | 73 | -38.5 | 4.08 | 0.33 |
| B | Linear polybutadiene | – | 72 | -39.4 | 2.77 | 0.58 |
| C | Linear polybutadiene | – | 75 | -36.3 | 2.04 | 0.90 |
| D | Linear polybutadiene | – | 69 | -42.4 | 0.63 | 4.92 |
| E | Linear styrene-butadiene copolymer | 18 | 51 | -38.3 | 3.65 | 0.54 |
| F | Linear styrene-butadiene copolymer | 19 | 58 | -30.4 | 2.71 | 0.79 |
| G | Linear styrene-butadiene copolymer | 20 | 58 | -28.6 | 1.27 | 2.08 |
| H | Linear styrene-butadiene copolymer | 20 | 61 | -26.5 | 1.01 | 2.78 |

EP 0 186 985 B1

Table 2

| | | Polymer(s) and mixing ratio of polymers | [η] | LCEC | Tan δ of vulcanized specimen (60°C) | Wet grip index |
|---|---|---|---|---|---|---|
| Exam-ples | 1 | A = 100 | 4.08 | 0.33 | 0.092 | 103 |
| | 2 | B = 100 | 2.77 | 0.58 | 0.097 | 103 |
| | 3 | E = 100 | 3.65 | 0.54 | 0.096 | 104 |
| Com-para-tive Exam-ples | 1 | A/D = 78/22 | 3.32 | 1.35 | 0.127 | 103 |
| | 2 | B/D = 82/18 | 7.38 | 1.35 | 0.126 | 103 |
| | 3 | C/D = 89/11 | 1.88 | 1.35 | 0.126 | 103 |
| | 4 | E/H = 64/36 | 2.81 | 1.35 | 0.124 | 104 |
| | 5 | F/H = 72/28 | 2.11 | 1.35 | 0.124 | 105 |
| | 6 | E/G = 47/53 | 2.43 | 1.35 | 0.127 | 105 |
| | 7 | F/G = 57/43 | 1.97 | 1.35 | 0.127 | 105 |
| | 8 | A/D = 91/9 | 3.71 | 0.75 | 0.110 | 104 |
| | 9 | B/D = 96/4 | 2.68 | 0.75 | 0.108 | 104 |
| | 10 | C = 100 | 2.04 | 0.90 | 0.110 | 103 |
| | 11 | F = 100 | 2.71 | 0.79 | 0.108 | 105 |
| | 12 | E/D = 90/10 | 3.36 | 0.98 | 0.113 | 103. |
| | 13 | G/H = 76/24 | 1.21 | 2.25 | 0.152 | 105 |
| | 14 | B/D = 72/28 | 2.32 | 1.80 | 0.140 | 103 |
| | 15 | SBR#1500[1] = 100 | 1.80 | – | 0.146 | 100 |
| | 16 | G = 100 | 1.27 | 2.08 | 0.147 | 105 |
| | 17 | H = 100 | 1.01 | 2.78 | 0.160 | 105 |

[1]  SBR#1500 : Styrene-butadiene rubber prepared by emulsion polymerization method (Sumitomo Chemical Company, Limited)

**Claims**

1. A diene elastomer composition which contains a rubber material comprising a rubbery component and, as main ingredient, an elastomeric polymer component which is a butadiene homopolymer and/or styrene-butadiene copolymer which has been produced using an organolithium compound as a copolymerization initiator, the elastomeric component having a long chain end concentration (LCEC) of 0.58 or less as defined by the following formula:

$$LCEC = \sum_i \beta_i \times (\alpha \times 10^5) / (\overline{MW})_i$$

wherein

$\alpha$: total number of terminal groups in long chain molecules per polymer;

$\overline{MW}$: a value obtained from intrinsic viscosity of the polymer when measured in toluene at 30°C by the following formulas:

$\overline{MW} = 70{,}660 \times [\eta]^{1.282}$ for styrene-butadiene copolymer,

$\overline{MW} = 79{,}167 \times [\eta]^{1.443}$ for butadiene homopolymer,

$\beta_i$: weight fraction of component i when $\overline{MW} = (\overline{MW})_i$.

2. A diene elastomer composition according to claim 1 wherein the elastomeric polymer has an LCEC of 0.2 to 0.58 and a glass transition temperature of −55°C to −25°C.

# EP 0 186 985 B1

3. A diene elastomer composition according to claim 1 or 2 wherein the rubber material contains 60 to 100% by weight of the elastomeric polymer and 0 to 40% by weight of the rubbery component.

4. A diene elastomer composition according to claim 1, 2 or 3 wherein the rubbery component is natural rubber, synthetic isoprene rubber, emulsion polymerized styrene-butadiene rubber or high cis-polybutadiene rubber.

5. A diene elastomer composition according to any one of claims 1 to 4 which contains 30 to 80 parts by weight of carbon black and 0 to 30 parts by weight of oil per 100 parts by weight of the rubber material.

6. Use of a diene elastomer composition as claimed in any one of the preceding claims as tread rubber for automobile tires.

## Patentansprüche

1. Dien-Elastomerzusammensetzung, die ein Gummimaterial enthält, umfassend eine gummiartige Komponente und, als Hauptkomponente eine elastomere Polymerkomponente, die ein Butadien-Homopolymer und/oder ein Styrol-Butadien-Copolymer ist, das hergestellt wurde unter Verwendung einer Organolithiumverbindung als Copolymerisationsinitiator, wobei die elastomere Komponente eine Langketten-Endkonzentration (LCEC) von 0,58 oder weniger aufweist, wie sie durch die folgende Formel definiert wird:

$$LCEC = \sum_i \beta i \times (\alpha \times 10^5) / (\overline{MW})_i$$

in welcher

$\alpha$: Gesamtzahl der Endgruppen in Langkettenmolekülen pro Polymer;

$\overline{MW}$: ein Wert der erhalten wurde aus der Grenzviskosität des Polymeren, gemessen in Toluol bei 30°C, durch die folgenden Formeln:

$\overline{MW} = 70{,}660 \times _{[\eta]}{}^{1,282}$ für das Styrol-Butadien-Copolymere,

$\overline{MW} = 79{,}167 \times _{[\eta]}{}^{1,443}$ für das Butadien-Homopolymere,

$\beta i$: Gewichtsfraktion der Komponente i wenn $\overline{MW} = (\overline{MW})_i$.

2. Dien-Elastomerzusammensetzung nach Anspruch 1, in welcher das elastomere Polymere eine LCEC von 0,2 bis 0,58 und eine Glasübergangstemperatur von −55°C bis −25°C aufweist.

3. Dien-Elastomerzusammensetzung nach Anspruch 1 oder 2, in welcher das Gummimaterial 60 bis 100 Gew.-% des elastomeren Polymeren und 0 bis 40 Gew.-% der gummiartigen Komponente enthält.

4. Dien-Elastomerzusammensetzung nach Anspruch 1, 2 oder 3, in welcher die gummiartige Komponente natürlicher Kautschuk, synthetischer Isopren-Kautschuk, Emulsions-polymerisierter Styrol-Butadien-Kautschuk oder Kautschuk aus Polybutadien mit hohem cis-Anteil ist.

5. Dien-Elastomerzusammensetzung nach irgendeinem der Ansprüche 1 bis 4, die 30 bis 80 Gew.-Teile Ruß und 0 bis 30 Gew.-Teile Öl pro 100 Gew.-Teile des Gummimaterials enthält.

6. Verwendung einer Dien-Elastomerzusammensetzung wie in irgendeinem der vorangehenden Ansprüche beansprucht als Laufflächengummi für Kraftfahrzeugreifen.

## Revendications

1. Composition à base d'élastomère de diène qui contient un caoutchouc, comprenant un constituant caoutchouteux et, comme ingrédient principal, un constituant élastomère à base d'un polymère, qui est un homopolymère de butadiène et/ou un copolymère de styrène et de butadiène préparé en utilisant un composé organolithium comme initiateur de copolymérisation, le constituant élastomère ayant une concentration d'extrémités de longues chaînes (LCEC) de 0,58 ou inférieure à cette valeur, telle que définie par la formule suivante:

$$LCEC = \sum_i \beta i \times (\alpha \times 10^5) / (\overline{MW})_i$$

dans laquelle

$\alpha$: nombre total de groupes terminaux de molécule à longue chaîne par polymère;

$\overline{MW}$: valeur obtenue à partir de la viscosité intrinsèque du polymère mesurée dans le toluène à 30°C par les formules suivantes:

$\overline{MW} = 70{,}660 \times _{[\eta]}{}^{1,282}$ pour un copolymère de styrène et de butadiène,

$\overline{MW} = 79{,}167 \times _{[\eta]}{}^{1,443}$ pour un homopolymère de butadiène,

$\beta i$: fraction pondérale du constituant i quand $\overline{MW} = (\overline{MW})_i$.

2. Composition à base d'élastomère de diène suivant la revendication 1, dans laquelle le polymère élastomère a une LCEC de 0,2 à 0,58 et un point de transition à l'état vitreux de −55°C à −25°C.

3. Composition à base d'élastomère de diène suivant la revendication 1 ou 2, dans laquelle le caoutchouc contient de 60 à 100% en poids du polymère élastomère et de 0 à 40% en poids du constituant caoutchouteux.

4. Composition à base d'élastomère de diène suivant la revendication 1, 2 ou 3, dans laquelle le constituant caoutchouteux est du caoutchoux naturel, du caoutchouc d'isoprène synthétique, du caoutchouc styrène-butadiène polymérisé en émulsion ou du caoutchouc de polybutadiène à haute teneur en cis.

5. Composition à base d'élastomère de diène suivant l'une quelconque des revendications 1 à 4, qui contient de 30 à 80 parties en poids de noir de carbone et de 0 à 30 parties en poids d'une huile pour 100 parties en poids du caoutchouc.

6. Utilisation d'une composition à base d'élastomère de diène, telle que revendiquée à l'une quelconque des revendications précédentes, comme caoutchouc de bandes de roulement pour des pneumatiques d'automobile.

8